# EUROPEAN PATENT APPLICATION

(11) **EP 1 857 912 A1**
(43) Date of publication of application: **21.11.2007**
(21) Application number: 06114020.8
(22) Date of filing: 16.05.2006
(51) Int. Cl.: G06F 3/00

(54) **Tactile feedback system and method for a mobile communication device having a trackball**

(71) Applicant: Research In Motion Limited, Waterloo, Ontario N2L 3W8 (CA)
(72) Inventor: Munroe, LeSalle, Waterloo Ontario N2J 3Y5 (CA); Lowles, Robert, Waterloo Ontario N2T 2J5 (CA); Mankaruse, George, Kitchener, Ontario N2R 1V8 (CA); Hui, Edward, Mississauga, Ontario L5N 3C6 (CA)
(74) Representative: Rickard, David John

(57) **Abstract**

The invention is directed at a tactile feedback system and method for a handheld electronic device having a trackball. As the user uses the trackball to move a navigation tool over the display, a tactile feedback is provided to the user as an indication of the objects over which the navigation tool has rolled over.

## Description

The invention relates generally to mobile communication devices. More particularly, the invention relates to a tactile feedback system and method for a mobile communication device having a trackball.

The use of handheld electronic devices, such as mobile communication devices, is widespread and has been growing for many years. These devices include personal digital assistants, cell phones and the like. Older versions of these devices were bulky and simply provided a keypad whereby a user could enter a phone number to use the device. Newer versions are smaller and more compact and further include user input devices, such as a trackball.

The trackball is generally used to assist the user navigating a navigation tool over the mobile communication device display in a manner similar to a mouse for a computer. One of the disadvantages of some current trackballs is that there is no tactile sensation when the user is rolling the trackball such that a user is not able to determine when they roll over an icon. This is typically due to the fact that trackballs typically lack a mechanical detent and rolls freely within its position in the device.

Some current mobile communication devices overcome this problem by providing an audio feedback. However, the audio feedback may be a distraction under certain circumstances.

Another solution in use is the VibeTonz Mobile Player by Immersion Corporation which uses a vibration motor in combination with a software development kit to provide various touch sensations to the user. These sensations are typically utilized for key presses, ring tones, caller ID, messaging and/or gaming. However, this system requires a series of vibration pulses and does not provide the quick and sharp response that would be equivalent to a tactile feel. In addition, the system cannot respond fast enough to keep up with the rate at with a trackball can be scrolled.

It is, therefore, desirable to provide a novel a tactile feedback system and method for a mobile communication device having a trackball.

Preferably the invention obviates or mitigates at least one disadvantage of previous trackball feedback systems.

An embodiment preferably allows a user to scroll around the mobile communication device display and provides the user with a tactile feedback system indicating to the user the number of applications/icons/objects/fields, and the like, that the user has rolled over.

In a first aspect of the invention, there is preferably provided a tactile feedback system for a handheld electronic device having a trackball for controlling a navigation tool comprising a processor; a feedback mechanism for providing said tactile feedback; and at least one sensor means, in communication with said processor; wherein when said sensor senses movement of said trackball from a first object to a second object, said feedback mechanism is triggered to provide a tactile feedback to a user representing said movement.

In yet a further aspect, there is preferably provided a method of providing a tactile feedback system for a handheld electronic device having a trackball for controlling a navigation tool comprising the steps of sensing trackball movement; determining an object over which said navigation tool has rolled over based on said trackball movement; transmitting a signal to a feedback mechanism to provide a tactile feedback based on said object; and providing said tactile feedback to a user.

In yet another aspect, there is preferably provided a handheld electronic device having a trackball for controlling a navigation tool comprising a tactile feedback system for trackball use comprising a processor; a drive circuit, connected to the processor; and at least one sensor, in communication with the processor; wherein when said sensor senses movement of said trackball from a first object to a second object, and communicates said movement to said processor, said processor transmits a signal to said drive circuit to provide a tactile feedback to a user representing said movement.

Other aspects and features of the invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is a block diagram of a handheld electronic device in accordance with the invention;
Figures 2a to 2c are screen shots of a handheld electronic device display;
Figure 3 is a flowchart outlining a method of providing tactile feedback for a handheld electronic device and
Figure 4 is a block diagram of an exemplary embodiment of a handheld electronic device.

### DESCRIPTION OF PREFERRRED EMBODIMENTS

Generally, the invention provides a tactile feedback system and method for a handheld electronic device, such as a mobile communication device, having a trackball. An embodiment allows a user to scroll around the mobile communication device display and provides the user with a tactile feedback system indicating to the user the number of applications/icons/objects/fields, and the like, that the user has rolled over.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

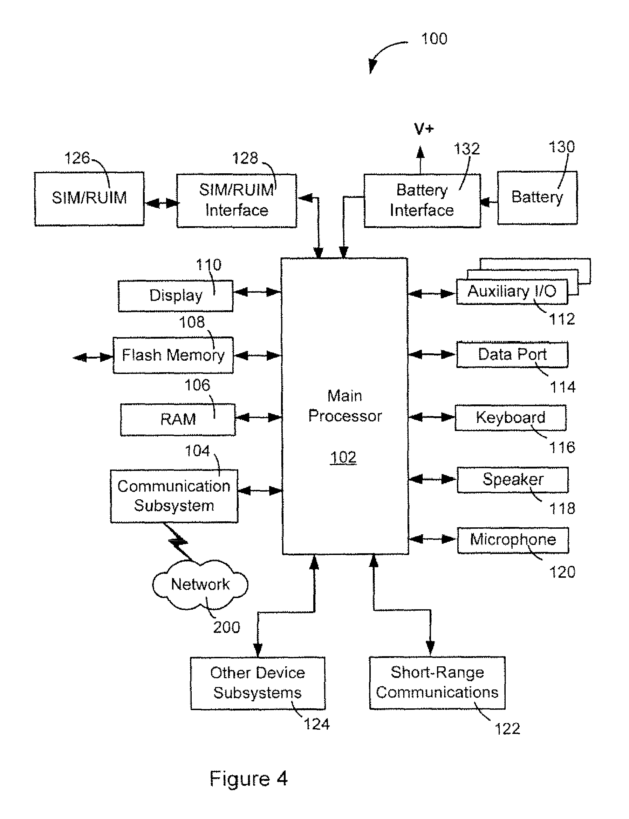

Referring first to Figure 4, shown therein is a block diagram of an exemplary embodiment of a mobile device 100. The mobile device 100 includes a number of components such as a main processor 102 that controls the overall operation of the mobile device 100. Communication functions, including data and voice communications, are performed through a communication subsystem 104. The communication subsystem 104 receives messages from and sends messages to a wireless network 200. In this exemplary embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one exemplary implementation, other wireless networks may also be associated with the mobile device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) information and recent call information. Alternatively, user identification information can also be programmed into the flash memory 108.

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, will normally be installed on the mobile device 100 during its manufacture. Other software applications include a message application 138 that can be any suitable software program that allows a user of the mobile device 100 to send and receive electronic messages. Various alternatives exist for the message application 138 as is well known to those skilled in the art. Messages that have been sent or received by the user are typically stored in the flash memory 108 of the mobile device 100 or some other suitable storage element in the mobile device 100. In at least some embodiments, some of the sent and received messages may be stored remotely from the device 100 such as in a data store of an associated host system that the mobile device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

The additional applications can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

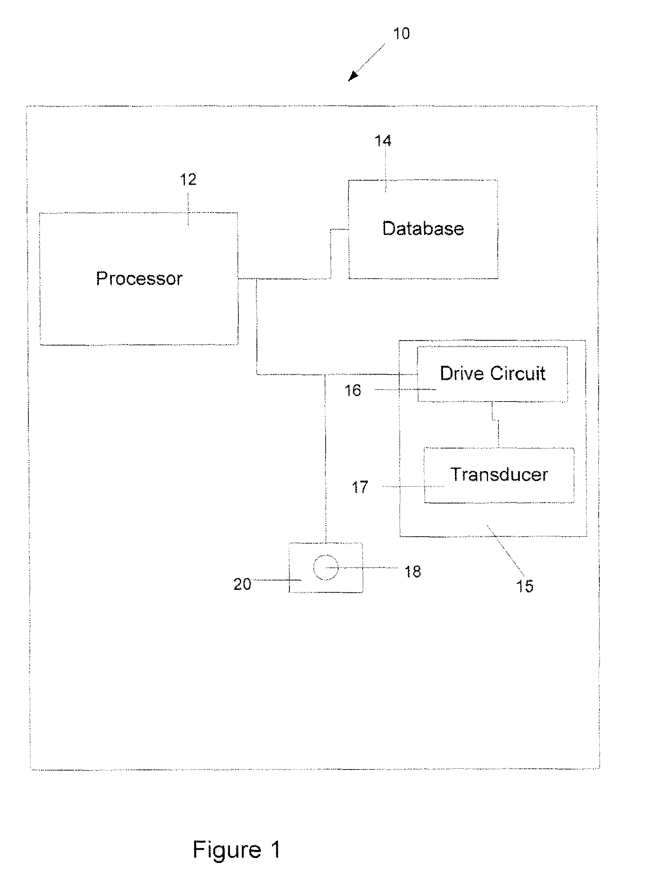

Turning to Figure 1, a schematic diagram of a handheld electronic device, such as a mobile communication device, 10 is shown. The handheld mobile communication device 10 includes a processor 12 which is connected to a database 14, a feedback mechanism 15 comprising a drive circuit 16 and transducer 17 (such as a vibration motor) and a trackball 18. The drive circuit drives the transducer in such a manner to be able to produce a sharp and distinct vibration. In one embodiment, the drive circuit uses an H-Bridge. A sensor, or set of sensors, 20 is connected to the trackball 18 to monitor its movement. The trackball 18 is used to move a navigation tool around the mobile communication device display. It will be understood that the mobile communication device 10 includes many other parts for operation and that Figure 1 simply illustrates an embodiment of a tactile feedback system for the mobile communication device having a trackball.

In operation, when a user uses the trackball 18 on the mobile communication device 10 to navigate a mobile communication device display, the sensor 20 monitors the movement of trackball to determine the direction in which the user intends to move the navigation tool 22. After sensing the movement direction (and possibly distance), the sensor 20 transmits a signal to the processor 12 to move the navigation tool in accordance with the trackball movement.

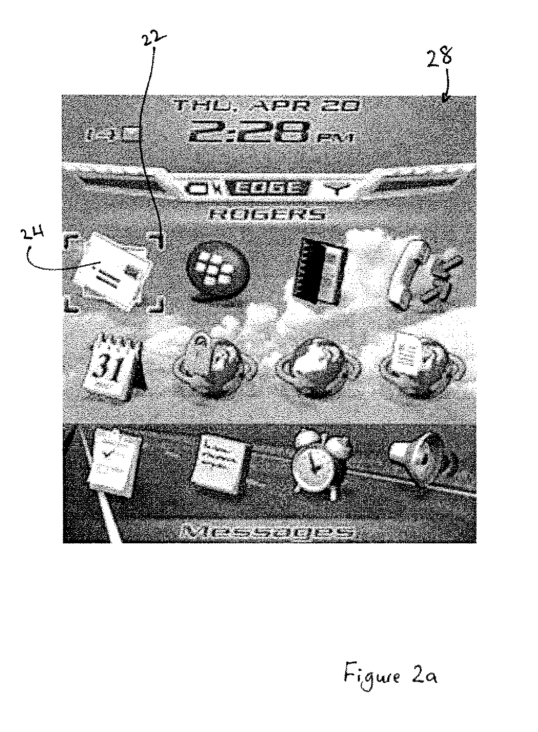

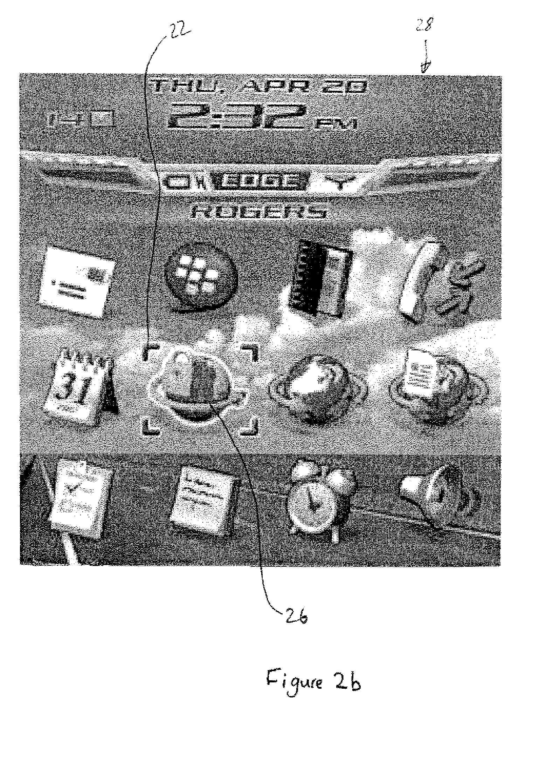

When the navigation tool 22 moves from a first field, seen as application icon 24 (as shown in Figure 2a) to a second field, seen as application icon, 26 (as shown in Figure 2b) in the display 28, the processor 12 determines the type of field, or object, (in this case an application icon) that has been selected and determines if a tactile feedback is required to be provided to the user. An example of a tactile feedback is a sharp or distinct vibration of the device and/or trackball. A method of vibrating a handheld electronic device at different vibration intensities is disclosed in US Patent Application No. 2005/0275508 entitled "HANDHELD ELECTRONIC DEVICE INCLUDING VIBRATOR HAVING DIFFERENT VIBRATION INTENSITIES AND METHOD FOR VIBRATING A HANDHELD ELECTRONIC DEVICE", which is hereby incorporated by reference.

If tactile feedback is required, the processor 12 then transmits a signal to the transducer 17 to produce a feedback indicating to the user that the navigation tool 22 has rolled over another application icon. It will be understood that feedback, or vibration, intensities may be associated with each type of field, or object, which the navigation tool may roll over with this information being stored in a table in the database 14 or a hardcoded table. Fields or objects include, but are not limited to, application icons, menu items and text fields.

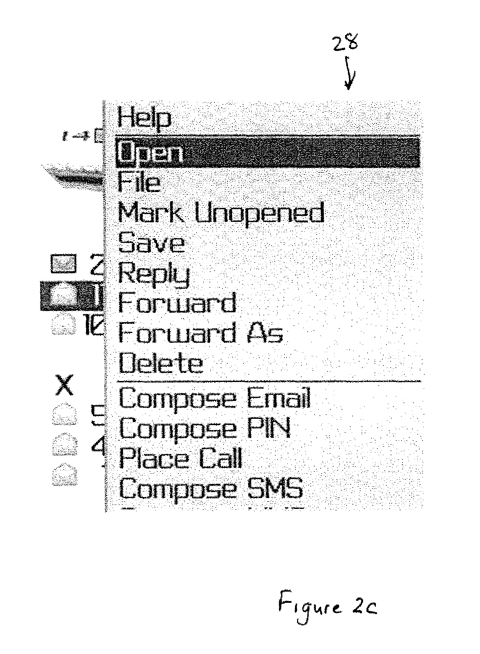

As the navigation tool continues to travel across the display, each time the navigation tool rolls over an application icon, the processor transmits a signal to the transducer 17 to provide a tactile feedback to the user. If the user accesses a menu item screen (as shown in Figure 2c), the processor determines the type of object and feedback intensity and transmits a signal to the transducer 17 to provide the feedback.

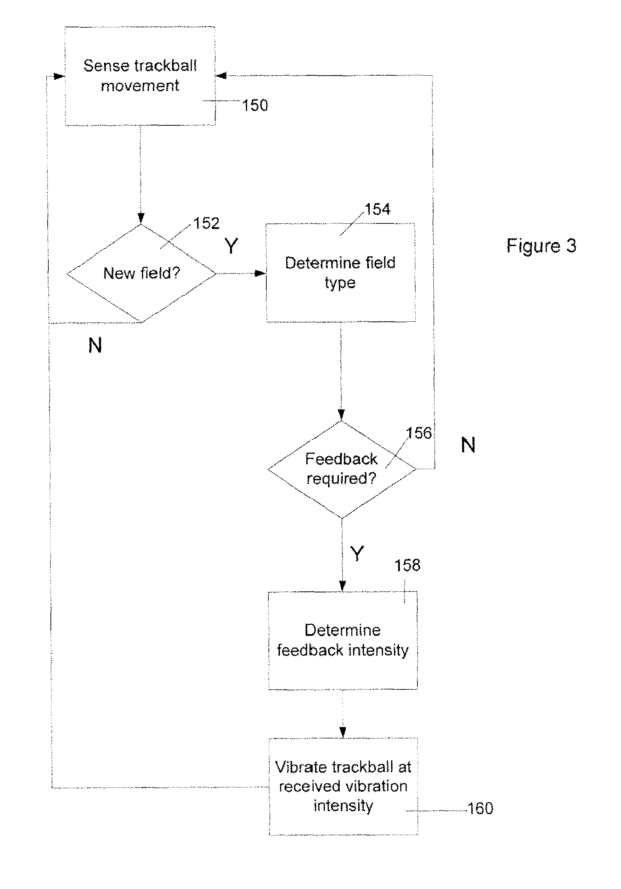

Turning to Figure 3, a method of providing tactile feedback to a handheld electronic device, or mobile communication device, having a trackball is shown. Some examples of fields, or objects, which the navigation tool may roll over include application icons, menu items and text fields. Each of these groups of fields, or objects, are located in separate screen types seen as a navigation screen (application icons), a menu item screen (menu items) and a text field screen (text fields).

In operation, the sensor 20, or sensors, within the handheld electronic device 10 sense(s) the movement of the trackball 18 in either a vertical, horizontal or diagonal direction (step 150). Once this movement is sensed, the processor 12 receives a signal representing this movement from the sensor 20 and moves the navigation tool accordingly. The processor 12 then determines if a new field is rolled over (such as a different application icon, a menu item or a text field) (step 152). If the navigation tool has not rolled over a new field or rolling past the end of available objects, the device simply returns to sensing further trackball movement (step 150).

If a new field is rolled over, the processor 12 determines the type of object (or field) which has been rolled over (step 154). After determining the field type, the processor 12 determines if the new field has been associated with a tactile feedback vibration intensity (step 156). If no tactile feedback is required, the device simply returns to sensing trackball movement (step 150).

However, if the new field requires a tactile feedback to be provided, the processor 12 determines the feedback intensity (step 158). The processor 12 then transmits a signal to the transducer 17 to provide the required feedback. After providing the feedback, the device (step 160) returns to sensing trackball movement (step 150).

An advantage of an embodiment the tactile feedback system is that a user of the mobile communication device gets the sense or physically rolling over objects as they navigate the display and the ability to distinguish between different objects on the display without having to look at the display.

Alternatively, different vibrations of the trackball may be provided to the user when they are accessing the Internet to differentiate when the user is rolling over text in the website or an active link in the website.

In yet a further embodiment, when a user is checking their messages, a feedback may be applied to the trackball each time the navigation tool rolls over a message so that the user may have an understanding as to how many messages they have scrolled, or rolled, past.

Alternatively, other forms of providing feedback to the user via the trackball are contemplated and may not always include a vibration.

In an alternative embodiment, there is provided a tactile feedback system for a handheld electronic device having a trackball for controlling a navigation tool comprising a processor; a drive circuit, connected to the processor; and at least one sensor, in communication with the processor; wherein when said sensor senses movement of said trackball from a first object to a second object, and communicates said movement to said processor, said processor transmits a signal to said drive circuit to provide a tactile feedback to a user representing said movement.

In another embodiment, there is provided a method of providing a tactile feedback system for a handheld electronic device having a trackball for controlling a navigation tool comprising the steps of sensing trackball movement; determining an object over which the navigation tool has rolled over based on the trackball movement; transmitting a signal to a drive circuit to provide a tactile feedback based on the object; and providing the tactile feedback to a user.

In yet a further embodiment, the navigation tool may be used to navigate a cursor on a display through a plurality of user interface objects, hereby these objects in clued user interface icons, menu items, text fields, label fields, drop down lists, combination buttons, dialog boxes and other user interface-centric input or display elements.

With respect to the different vibration intensities, one example may be t provide a quick bump for a text field, a long roll for a menu item and two bumps or clicks for a drop down list. Furthermore, different types of tactile feedback may be associated with different applications executing on the handheld electronic device.

Alternatively, the tactile feedback provided by the handheld electronic device to the user may be configurable. Moreover, tactile feedback may be provided to the user when the navigation tool has reached an end of a field or range of motion such as when scrolling in a browser page, tactile feedback may be provided when the user reaches the bottom of the page.

In yet another embodiment, the tactile feedback may be data specific such as with specific words or font sizes, changes in colour, changes in text style.

In yet another embodiment, the tactile feedback is preferably not dependent on noise.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A tactile feedback system for a handheld electronic device having a trackball for controlling a navigation tool comprising:
a processor;
a feedback mechanism for providing said tactile feedback; and
at least one sensor means, in communication with said processor;
wherein when said sensor means senses movement of said trackball to, over or towards an object, said feedback mechanism is triggered to provide a tactile feedback to a user.

2. The tactile feedback system of Claim 1, wherein when said sensor means senses movement of said trackball from a first object to a second object, said feedback mechanism is triggered to provide a tactile feedback to a user representing said movement.

3. The tactile feedback system of Claim 1 or Claim 2 wherein said object or objects comprise any of application icons, menu items, text fields, label fields, drop down lists, combination buttons or dialog boxes.

4. The tactile feedback system of any preceding Claim further comprising a database for storing vibration profiles associated with said object or objects.

5. The tactile feedback system of Claim 4 wherein said vibration profiles are based on vibration intensity.

6. The tactile feedback system of any preceding claim wherein said feedback mechanism comprises:
a drive circuit; and
a transducer.

7. The tactile feedback system of claim 6 wherein said transducer is a vibration motor.

8. A method of providing a tactile feedback to a user of a handheld electronic device having a trackball for controlling a navigation tool comprising the steps of:
sensing trackball movement;
determining an object to, over or towards which said navigation tool has rolled based on said trackball movement;
transmitting a signal to a feedback mechanism to provide a tactile feedback based on said object; and
providing said tactile feedback to a user.

9. The method of Claim 8 further comprising, after said step of sensing, the steps of:
determining the type of object; and
accessing a database to retrieve a vibration profile associated with said object.

10. The method of Claim 8 or claim 9 wherein said object comprises any of application icons, menu items, text fields, label fields, drop down lists, combination buttons or dialog boxes

11. The method of any one of Claims 8 to 10 wherein said step of providing said tactile feedback to a user comprises the step of: vibrating said device and/or trackball.

12. A handheld electronic device having a trackball for controlling a navigation tool comprising a tactile feedback system according to any one of claims 1 to 7.

13. A computer program product for providing a tactile feedback to a user of a handheld electronic device having a trackball for controlling a navigation tool, said computer program product comprising program code means executable in a computing device for implementing the method of any one of claims 8 to 11.
